# EUROPÄISCHE PATENTSCHRIFT

(11) **EP 0 764 099 B1**
(45) Veröffentlichungstag und Bekanntmachung des Hinweises auf die Patenterteilung: **06.05.1999**
(21) Anmeldenummer: 96902860.4
(22) Anmeldetag: 15.02.1996
(51) Int. Cl.: B60S 1/16, H02K 7/08, H02K 7/116, F16H 57/02

(54) **ANTRIEBSAGGREGAT MIT EINEM ELEKTRISCHEN ANTRIEBSMOTOR UND EINEM DIESEM NACHGEORDNETEN SCHNECKENGETRIEBE**
DRIVING UNIT WITH AN ELECTRIC DRIVING MOTOR AND A WORM GEAR CONNECTED DOWNSTREAM TO SAID MOTOR
GROUPE D'ENTRAINEMENT AVEC UN MOTEUR ELECTRIQUE D'ENTRAINEMENT ET UN ENGRENAGE A VIS SANS FIN MONTE EN AVAL DU MOTEUR

(30) Priorität: 09.03.1995 DE 19508306
(43) Veröffentlichungstag der Anmeldung: 26.03.1997
(73) Patentinhaber: ROBERT BOSCH GMBH, 70442 Stuttgart (DE)
(72) Erfinder: BOHN, Roland, D-77815 Buehl (DE); BECKER, Ewald, D-77815 Buehl (DE)
(86) Internationale Anmeldenummer: DE9600234
(87) Internationale Veröffentlichungsnummer: WO9628323

(56) Entgegenhaltungen:
- EP-A- 0 563 583
- GB-A- 1 003 388
- US-A- 5 169 245
- US-A- 5 212 999

## Beschreibung

### Stand der Technik

Gattungsgemäße Antriebsaggregate werden zum Betreiben von Hilfseinrichtungen in Kraftfahrzeugen eingesetzt. Bei der Verwendung beispielsweise in Scheibenwischanlagen von Kraftfahrzeugen wird die von Ankerwelle und Schneckenwelle gebildete Antriebswelle während des Betriebs einer wechselnden Axialbelastung unterworfen, die von Null - bei in den Umkehrlagen befindlichen Wischblättern - bis zu einem Maximum - bei aus den Umkehrlagen beschleunigten oder zu diesen hin abgebremsten Wischblättern - reicht. Diese durch das Schneckengetriebe in die Antriebswelle eingeleitete Axialbelastung führt zu unerwünschten Klopfgeräuschen des Antriebsaggregats, wenn die Antriebswelle zwischen einem motorseitigen und einem getriebeseitigen Axialanschlag Längsspiel aufweist.

Damit dieses Antriebswellen-Längsspiel auf Dauer beseitigt ist, hat man bei einem in Handel befindlichen Antriebsaggregat schneckenwellenseitig eine in Verlängerung der Antriebswellen-Drehachse das Aggregatgehäuse durchdringende Gewindebohrung angeordnet, in welche ein Gewindestift eingedreht ist. Dieser Gewindestift weist eine zur Antriebswelle offene, zentrale Sackbohrung auf, in der eine Schrauben-Druckfeder angeordnet ist, welche vorgespannt gegen einen an der ihr zugewandten Wellenstirnseite angelegten Anlaufpilz druckt. Dabei muß die Vorspannung der zu den Federmitteln gehörenden Schraubendruckfeder größer sein als die maximal auf die Antriebswelle einwirkende Axialbelastung, welche aufgrund der gegebenen Schneckensteigungsrichtung stets zum freien Ende des Schneckenwellenteils der Antriebswelle gerichtet ist. Diese bekannte Art der Antriebswellen-Längsspielbeseitigung ist wegen der Anordnung der Gewindebohrung im Aggregatgehäuse kostenintensiv. Auch erfordert die bekannte Lösung zumindest einen manuellen und somit teuren Montageschritt.

### Vorteile der Erfindung

Bei dem erfindungsgemäßen Antriebsaggregat, das also die kennzeichnenden Merkmale des Hauptanspruchs aufweist, kann die Gewindebohrung entfallen. Ebenso sind weder ein Anlaufpilz noch der Gewindestift erforderlich, weil deren Funktionen alleine von dem blattfederartigen Federelement übernommen werden. Darüber hinaus kann die Festlegung des Federelements im Gehäuse automatengerecht gestaltet werden, so daß eine weitere Senkung der Herstellungskosten für das Antriebsaggregat zu verzeichnen ist.

Wenn in Weiterbildung der Erfindung die Endkanten des Federelements an einander gegenüberliegenden Gehäuseschultern festgelegt sind und weiter der Abstand zwischen den Gehäuseschultern kleiner ist als der Abstand zwischen den beiden Endkanten des Federelements spannt sich das Federelement zwangsläufig bei seiner Montage, wenn es zur getriebeseitigen Stirnseite der Antriebswelle hin zwischen die Schultern des Gehäuses eingebracht wird.

Eine besonders einfache, automatengerechte Montage ergibt sich, wenn die Gehäuseschultern an inneren Wänden des Gehäuses angeordnet sind und bezogen auf das Federelement auf der von der Schneckenwelle abgewandten Seite wenigstens eine der Gehäusewände mit einem Rücksprung versehen ist, so daß in diesem Bereich der Abstand zwischen den Gehäuse-Innenwänden größer ist als der Abstand zwischen den beiden Endkanten des Federelements.

Zweckmäßig weist das Federelement in Draufsicht gesehen im wesentlichen die Form eines Rechtecks auf, dessen Endkanten an den kürzeren Seiten des Rechtecks ausgebildet sind und die beiden Endabschnitte mit den Endkanten des Rechtecks um wenigstens einen Winkel α von 30° nach derselben Seite aus der Ebene des Mittelabschnitts herausgebogen sind. Eine solche Ausgestaltung des Federelements begünstigt dessen Montage im Aggregatgehäuse.

Zur Stabilisierung des Federelements sind dessen die beiden Längsseiten des Rechtecks bildenden Randbereiche um etwa 90° nach der gleichen Seite abgewinkelt, wie die Endabschnitte mit den Endkanten. Durch die gewählte Breite der Randbereiche kann auf einfache Weise der Verlauf der Federkennlinie des Federelements beeinflußt werden.

Mit Vorteil sind die beiden Randbereiche schmaler als die beiden Endabschnitte. Wenn weiter die auf der Seite der Schneckenwelle befindliche Schneide der Endkante mit einem Grat versehen ist, verbeißt sich diese Schneide an den Gehäuseschultern derart, daß besondere Befestigungsmittel für das Federelement entfallen können.

Eine besonders einfache Herstellung eines stabilen, betriebssicheren Federelements ist gewährleistet, wenn dieses aus einem Federbandstahl hergestellt ist.

In weiterer Ausgestaltung der Erfindung ist die am Federelement angelegte Stirnseite der Schneckenwelle ballig ausgebildet, so daß sich eine reibungsarme, weil zumindest annähernd punktförmige Berührung zwischen dem Federelement und der Antriebswelle ergibt.

Weisen die Endabschnitte des Federelements je einen Schlitz auf, so können dadurch Ungenauigkeiten der Oberfläche der Gehäuseschultern und Schrägen ausgeglichen werden.

Weitere, vorteilhafte Ausgestaltungen und Verbesserungen der Erfindung sind aus der Zeichnung und aus der dazugehörigen Beschreibung der Erfindung zu entnehmen.

### Zeichnung

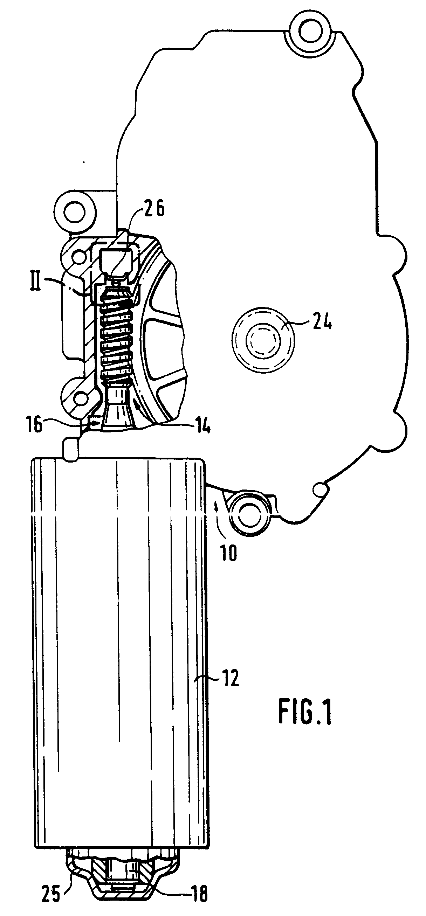

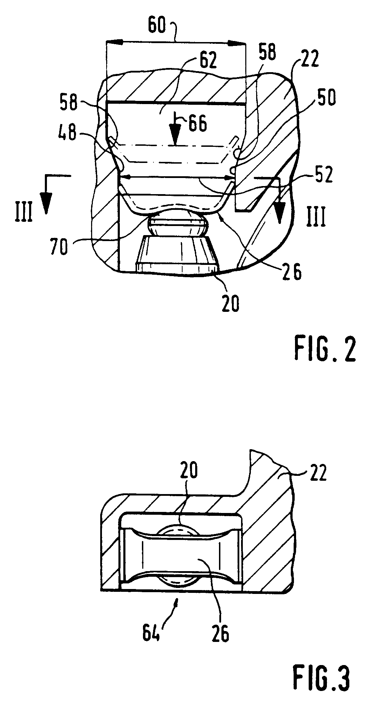

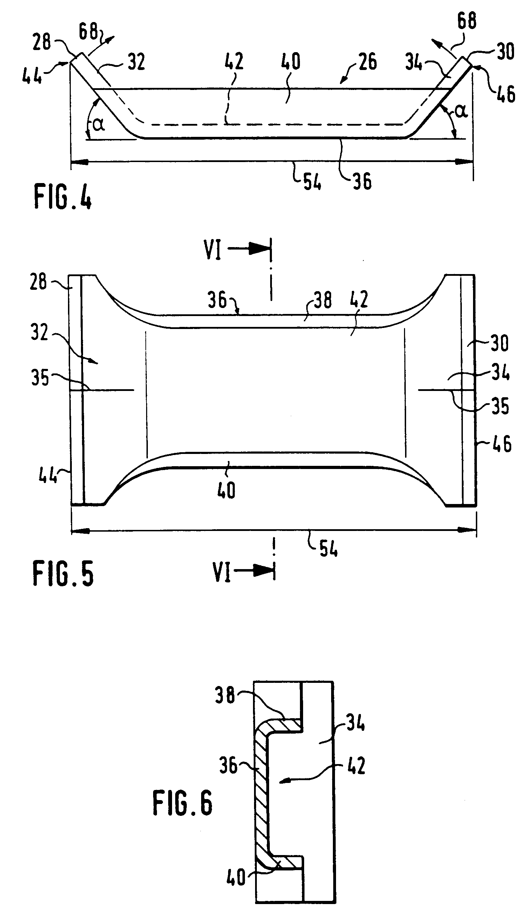

Ein Ausführungsbeispiel der Erfindung ist in der Zeichnung dargestellt und in der nachfolgenden Beschreibung näher erläutert. Es zeigen Figur 1 ein erfindungsgemäßes Antriebsaggregat in Ansicht, bei dem das Gehäuse im Bereich der beiden Enden der Antriebswelle aufgebrochen ist, Figur 2 eine in Figur 1 mit II bezeichnete Einzelheit in vergrößerter Darstellung, Figur 3 einen Schnitt entlang der Linie III-III durch die Einzelheit gemäß Figur 2, Figur 4 eine Ansicht des Federelements in vergrößerter Darstellung, Figur 5 eine Draufsicht auf das Federelement gemäß Figur 4 und Figur 6 einen Schnitt durch das Federelement entlang der Linie VI in Figur 5.

### Beschreibung des Ausführungsbeispiels

Ein in Figur 1 dargestelltes Antriebsaggregat 10 umfaßt einen elektrischen Antriebsmotor 12 und ein diesem nachgeordnetes, als Schneckengetriebe ausgebildetes Untersetzungsgetriebe 14. Eine Antriebswelle 16 des Antriebsaggregats 10 umfaßt eine zum elektrischen Antriebsmotor 12 gehörende Ankerwelle 18 und eine zum Schneckengetriebe 14 gehörende Schneckenwelle 20, welche eine Verlängerung der Motorankerwelle 18 bildet. Der elektrische Antriebsmotor 12 und das Schneckengetriebe 14 sind in einem Aggregatgehäuse 22 untergebracht. An einer aus dem Aggregatgehäuse 22 ragenden Abtriebswelle 24 ist eine nicht näher dargestellte, zu einem Kraftfahrzeug gehörende Wischvorrichtung angeschlossen, die beispielsweise als Pendelwischvorrichtung ausgebildet ist (Figur 1). Weiter ist aus Figur 1 ersichtlich, daß das motorseitige freie Stirnende der Antriebswelle 16 sich an einem zum Gehäuse 22 gehörenden Lagerschild 25 in Achsrichtung abstützt. An dem anderen, schneckenwellenseitigen Ende der Antriebswelle 16 sind am Aggregatgehäuse 22 gehaltene Federmittel 26 angeordnet, welche durch ein blattfederartiges Federelement gebildet sind. Dieses Federelement 26 sitzt in dem Aggregatgehäuse 22 und ist so vorgespannt, daß es die Antriebswelle 16 zum Lagerschild 25 hin belastet.

Die Ausgestaltung des Federelements wird im folgenden anhand der Figuren 4 bis 6 näher erläutert. Wie Figur 5 zeigt hat es in Draufsicht gesehen eine im wesentlichen rechteckige Gestalt. Seine beiden kürzeren Endkanten 28 und 30 erstrecken sich parallel zueinander. Weiter ist aus Figur 4 ersichtlich, daß die beiden Endabschnitte 32 und 34 mit den Endkanten 28 und 30 gegenüber einem Mittelabschnitt 36 des Federelements 26 um einen Winkel α aus der Ebene des Mittelabschnitts nach derselben Seite hin herausgebogen sind und einen Schlitz 35 aufweisen. Weiter zeigen insbesondere die Figuren 4 und 6, daß die beiden die Längsseiten des Rechtecks bildenden Randbereiche 38 und 40 des Federelements 26 nach der gleichen Seite wie die Endabschnitte 32 und 34 um etwa 90° abgewinkelt sind, so daß sich eine in Draufsicht rechteckförmige, muldendenartige Vertiefung 42 ergibt. Weiter ist ersichtlich, daß die beiden Randbereiche 38 und 40 schmaler sind als die Endabschnitte 32 und 34. Bei der Herstellung des Federelements 26 wird darauf geachtet, daß die nun äußeren Ecken 44 und 46 der Endkanten 28 und 30 als Schneide ausgebildet sind. Diese Ecken sollen also besonders scharfkantig sein. Von Vorteil ist es, wenn diese sogar mit einem Grat versehen sind, der beim Schneiden der Endkanten 28 und 30 entsteht.

Wie die Figuren 1 und 2 zeigen, weist das Aggregatgehäuse 22 in Verlängerung der Schneckenwelle 20 gesehen zwei mit Abstand und parallel zueinander verlaufende Gehäuseschultern 48 und 50 auf, wobei der Abstand 52 zwischen den an inneren Wänden des Getriebegehäuses 22 ausgebildeten Gehäuseschultern kleiner ist als der Abstand 54 zwischen den beiden Endkanten 28 und 30 bzw. den beiden Ecken 44 und 46 des Federelements 26 (Figur 5). Wie insbesondere Figur 2 zeigt, weisen die Schultern 48 und 50 in ihrem von der Schneckenwelle 20 wegführenden Verlauf je einen Rücksprung 58 auf, so daß sich ein Abstand 60 zwischen den beiden inneren Gehäusewänden im Bereich der Rücksprünge 58 ergibt, der größer ist als der Abstand 54 zwischen den beiden Endkanten 28 und 30 des Federelements 26. Es ergibt sich also ein Raum 62, in welchen das Federelement 26 in Richtung des Pfeiles 64 in Figur 3 quer zur Drehachse der Antriebswelle 16 spannungsfrei in das Aggregatgehäuse 22 eingeführt werden kann. Danach wird das Federelement 26 - welches in Figur 2 strichpunktiert in einer Vormontagestellung dargestellt ist - in Richtung des Pfeiles 66 (Figur 2) in seine in Figur 2 mit ausgezogenen Linien dargestellte Betriebsposition gebracht. Dabei lenken die Endabschnitte 32 und 34 des Federelements 26 in Richtung der Pfeile 68 (Figur 4) elastisch aus, so daß sie in der Betriebsposition des Federelements 26 unter Vorspannung gegen die Innenwände des Aggregatgehäuses 22 und somit auch gegen die Schultern 48 und 50 des Gehäuses drücken. Dabei verbeißen sich die schneidenförmigen bzw. mit einem Grat versehenen Ecken 44 und 46 in den Gehäuseschultern 48 und 50, so daß das Federelement 26 nicht mehr entgegen der Richtung des Pfeiles 66 verschoben werden kann. Durch die Schlitze 35 passen sich die Endabschnitte 32 und 34 der Oberfläche der Gehäuseschultern 48 und 50 an. Wie Figur 2 weiter zeigt, ist der Mittelabschnitt 36 des Federelements 26 in dessen Betriebsposition etwas durchgewölbt, was durch eine ballig ausgebildete Endstirnfläche 70 der Antriebswelle 16 bewirkt wird. Somit ist also auch der Mittelabschnitt 36 des Federelements in Richtung des Pfeiles 66 vorgespannt und drückt die Antriebswelle 16 mit ihrem anderen freien Ende gegen den Lagerschild 24. Dabei ist die Vorspannung so bemessen, daß einerseits keine unzulässige Erhöhung der Stromaufnahme des Antriebsmotors 12 erfolgt, andererseits aber auch noch gewisse Abnützungen an den Stirnseiten der Antriebswelle 16 kompensiert werden.

Das Antriebsaggregat 10 weist also vorgespannte Federmittel 26 auf, welche durch ein blattfederartiges, vorzugsweise aus Federbandstahl hergestelltes Federelement realisiert werden, das quer zur Drehachse der Schneckenwelle 20 in das Aggregat eingesetzt ist. Dieses Federelement 26 ist mit einander gegenüberliegenden Endkanten 28, 30 bzw. 44, 46 an Schultern 48, 50 des Aggregatgehäuses 22 festgelegt. Ein zwischen dienen Endkanten 28, 30 befindlicher Mittelabschnitt 36 des Federelements 26 greift vorgespannt an der ihm zugewandten Stirnfläche 70 der Schneckenwelle 20 an und belastet die Antriebswelle 16 derart, daß diese mit ihrem anderen, motorseitigen Stirnende an dem Lagerschild 25 des Antriebsmotors 12 zur Anlage kommt. Der zum Aggregatgehäuse 22 gehörende Lagerschild 25 bildet somit einen Axialanschlag für das andere, motorseitige Wellenende der Ankerwelle 18 bzw. der Abtriebswelle 24. Dadurch ergibt sich eine einfache und wirksame Längsspielbeseitigung für die Antriebswelle 16, die auch eine gewisse Abnützung an den beiden Axialabstützungen überbrücken kann.

## Patentansprüche

1. Antriebsaggregat (10) mit einem elektrischen Antriebsmotor (12) und einem diesem nachgeordneten Schneckengetriebe (14) dessen Schneckenwelle (20) eine Verlängerung der Motor-Ankerwelle (18) ist und sowohl der Antriebsmotor als auch das Schneckengetriebe von einem Gehäuse (22) umgeben sind, welches mit elastisch gegen die freie Stirnfläche der Schneckenwelle (20) drückenden, vorgespannten Federmitteln (26) zum Anlegen des anderen freien Wellenendes an einem Gehäuseanschlag versehen ist, dadurch gekennzeichnet, daß die Federmittel durch ein quer zur Drehachse der Schneckenwelle (20) ausgerichtetes, blattfederartiges Federelement (26) gebildet sind, welches mit einander gegenüberliegenden Endkanten (28, 30 bzw. 44, 46) an Schultern (48, 50) des Gehäuses (22) festgelegt ist und dessen zwischen den Endkanten befindlicher Mittelabschnitt (36) an der Stirnfläche (70) der Schneckenwelle (20) unter Vorspannung anliegt.

2. Antriebsaggregat nach Anspruch 1, dadurch gekennzeichnet, daß die Endkanten (28, 30 bzw. 44, 46) des Federelements (26) an einander gegenüberliegenden Gehäuseschultern (48, 50) festgelegt sind und daß der Abstand (52) zwischen den Gehäuseschultern kleiner ist als der Abstand (54) zwischen den beiden Endkanten (28, 30 bzw. 44, 46) des Federelements (26) im entspannten Zustand.

3. Antriebsaggregat nach Anspruch 2, dadurch gekennzeichnet, daß die Gehäuseschultern (48, 50) an inneren Wänden des Aggregatgehäuses (22) angeordnet sind und daß, bezogen auf das Federelement (26) auf der von der Schneckenwelle (20) abgewandten Seite wenigstens eine der Gehäusewände (48, 50) mit einem Rücksprung (58) versehen ist, so daß in diesem Bereich der Abstand (60) zwischen den Gehäuse-Innenwänden größer ist als der Abstand (54) zwischen den beiden Endkanten (28, 30 bzw. 44, 46) des Federelements (26).

4. Antriebsaggregat nach einem der Ansprüche 1 bis 3, dadurch gekennzeichnet, daß das Federelement (26) in Draufsicht gesehen im wesentlichen die Form eines Rechtecks aufweist, dessen Endkanten (28, 30) an den kürzeren Seiten des Rechtecks an dessen Endabschnitten (32, 34) ausgebildet sind, welche um wenigstens einen Winkel (α) von 30° nach derselben Seite aus der Ebene des Mittelabschnitts (36) herausgebogen sind.

5. Antriebsaggregat nach Anspruch 4, dadurch gekennzeichnet, daß die die beiden Längsseiten des Rechtecks bildenden Randbereiche (38, 40) um etwa 90° nach der gleichen Seite abgewinkelt sind wie die Endabschnitte (32, 34) mit den Endkanten (28, 30 bzw. 44, 46).

6. Antriebsaggregat nach Anspruch 5, dadurch gekennzeichnet, daß die beiden Randbereiche (38, 40) schmaler sind als die beiden Endabschnitte (32, 34).

7. Antriebsaggregat nach einem der Ansprüche 1 bis 6, dadurch gekennzeichnet, daß die auf der Seite der Schneckenwelle (20) befindliche Schneide (44, 46) der Endkante (28, 30) mit einem Grat versehen ist.

8. Antriebsaggregat nach einem der Ansprüche 1 bis 7, dadurch gekennzeichnet, daß das Federelement (26) aus einem Federbandstahl gefertigt ist.

9. Antriebsaggregat nach einem der Ansprüche 1 bis 8, dadurch gekennzeichnet, daß die am Federelement (26) angelegte freie Stirnfläche (70) der Schneckenwelle (20) ballig ausgebildet ist.

10. Antriebsaggrgat nach einem der vorhergehenden Ansprüche, dadurch gekennzeichnet, daß die Endabschnitte (32, 34) je einen Längsschlitz (35) aufweisen.

## Claims

1. Drive unit (10) with an electric drive motor (12) and a worm gear (14) which is connected downstream of said motor and whose worm shaft (20) is an extension of the motor anchor shaft (13) and in which both the drive motor and the worm gear are surrounded by a housing (22) which is provided with prestressed spring means (26), pressing elastically against the free end face of the worm shaft (20), for the purpose of causing the other free end shaft to bear against a housing stop, characterized in that the spring means are formed by a leaf-spring-like spring element (26) which is aligned transversely with respect to the axis of rotation of the worm shaft (20) and which is fixed by end edges (28, 30 and 44, 46) lying opposite one another to shoulders (40, 50) of the housing (22) and whose central section (36) which is located between the end edges bears against the end face (70) of the worm shaft (20) under prestress.

2. Drive unit according to Claim 1, characterized in that the end edges (28, 30 and 44, 46) of the spring element (26) are fixed to housing shoulders (48, 50) lying opposite one another, and in that the distance (52) between the housing shoulders is smaller than the distance (54) between the two end edges (28, 30 and 44, 46) of the spring element (26) in the unstressed state.

3. Drive unit according to Claim 2, characterized in that the housing shoulders (48, 50) are arranged on internal walls of the unit housing (22), and in that, with respect to the spring element (26) on the side facing away from the worm shaft (20), at least one of the housing walls (48, 50) is provided with an offset (58) so that in this region the distance (60) between the internal walls of the housing is greater than the distance (54) between the two end edges (28, 30 and 44, 46) of the spring element (26).

4. Drive unit according to one of Claims 1 to 3, characterized in that the spring element (26) has, in a plan view, essentially the shape of a rectangle whose end edges (28, 30) are formed on the shorter sides of the rectangle on its end sections (32, 34) which are bent out from the plane of the central section (36) to the same side by at least an angle (α) of 30°.

5. Drive unit according to Claim 4, characterized in that the edge regions (38, 40) which form the two longitudinal sides of the rectangle are bent away by approximately 90° to the same side as the end sections (32, 34) with the end edges (28, 30 and 44, 46).

6. Drive unit according to Claim 5, characterized in that the two edge regions (38, 40) are narrower than the two end sections (32, 34).

7. Drive unit according to one of Claims 1 to 6, characterized in that the cutting edge (44, 46) located on the side of the worm shaft (20) of the end edge (28, 30) is provided with a burr.

8. Drive unit according to one of Claims 1 to 7, characterized in that the spring element (26) is produced from a spring ribbon steel.

9. Drive unit according to one Claims 1 to 8, characterized in that the free end face (70), which is made to bear against the spring element (26), of the worm shaft (20) is convexly curved.

10. Drive unit according to one of the preceding claims, characterized in that the end sections (32, 34) each have a longitudinal slot (35).

## Revendications

1. Groupe d'entraînement (10) comprenant un moteur électrique (12) suivi d'une transmission à vis (14) dont l'arbre à vis (20) est un prolongement de l'arbre de l'induit (18) du moteur et à la fois le moteur et la transmission à vis sont entourés d'un boîtier (22) comportant des moyens à ressort (26) précontraints, s'appuyant élastiquement contre la surface frontale libre de l'arbre à vis (20) pour pousser l'autre extrémité libre de l'arbre contre une butée du boîtier,
caractérisé en ce que
les moyens à ressort sont constitués par un élément à ressort (26) en forme de lame de ressort alignée transversalement par rapport à l'axe de rotation de l'arbre à vis (20), cet élément étant fixé par des arêtes d'extrémité opposées (28, 30 ; 44, 46) contre les épaulements (48, 50) du boîtier (22) et dont le segment médian (36) entre les arêtes d'extrémité, s'appuie avec précontrainte contre la surface frontale (70) de l'arbre à vis (20).

2. Groupe d'entraînement selon la revendication 1,
caractérisé en ce que
les arêtes d'extrémité (28, 30 ; 44, 46) de l'élément à ressort (26) sont fixées contre des épaulements opposés (48, 50) du boîtier et en ce que la distance (52) entre les épaulements du boîtier est inférieure à la distance (54) entre les deux arêtes d'extrémité (28, 30 ; 44, 46) de l'élément à ressort (26) à l'état détendu.

3. Groupe d'entraînement selon la revendication 2,
caractérisé en ce que
les épaulements (48, 50) sont prévus sur les parois intérieures du boîtier (22) et, rapportés à l'élément à ressort (26), sur le côté non tourné vers l'arbre à vis (20), au moins l'une des parois (48, 50) du boîtier comporte un retrait (58) pour que dans cette zone la distance (60) entre les parois intérieures du boîtier soit supérieure à la distance (54) entre les deux arêtes d'extrémité (28, 30 ; 44, 46) de l'élément à ressort (26).

4. Groupe d'entraînement selon l'une quelconque des revendications 1 à 3,
caractérisé en ce que
l'élément à ressort (26) présente en vue de dessus une forme assimilable à un rectangle dont les arêtes d'extrémité (28, 30) correspondent aux petits côtés du rectangle et sont réalisées sur les segments d'extrémité (32, 34), ceux-ci étant repliés au moins d'un angle (α) de 30° du même côté par rapport au plan du segment médian (36).

5. Groupe d'entraînement selon la revendication 4,
caractérisé en ce que
les bords (38, 40) qui forment les deux grands côtes du rectangle sont repliés d'un angle d'environ 90° du même côté que les segments d'extrémité (32, 34) avec les arêtes d'extrémité (28, 30 ; 44, 46).

6. Groupe d'entraînement selon la revendication 5,
caractérisé en ce que
les deux bords (38, 40) sont plus étroits que les deux segments d'extrémité (32, 34).

7. Groupe d'entraînement l'une des revendications 1 à 6,
caractérisé en ce que
les arêtes (44, 46) des bords d'extrémité (28, 30) du côté de l'arbre à vis (20) sont munies d'une bavure.

8. Groupe d'entraînement selon l'une des revendications 1 à 7,
caractérisé en ce que
l'élément à ressort (26) est fabriqué à partir d'un ruban d'acier à ressort.

9. Groupe d'entraînement selon l'une des revendications 1 à 8,
caractérisé en ce que
la surface libre (70) de l'arbre à vis (20) appliquée contre l'élément à ressort (26) est de forme bombée.

10. Groupe d'entraînement selon l'une quelconque des revendications précédentes,
caractérisé en ce que
les segments d'extrémité (32, 34) ont chacun une fente longitudinale (35).
